# NEUE EUROPÄISCHE PATENTSCHRIFT

(11) **EP 1 352 535 B2**
(45) Veröffentlichungstag und Bekanntmachung des Hinweises auf die Entscheidung über den Einspruch: **10.04.2013**
(45) Hinweis auf die Patenterteilung: 21.07.2004
(21) Anmeldenummer: 02700158.5
(22) Anmeldetag: 18.01.2002
(51) Int. Cl.: B60R 11/02, H04M 1/60

(54) **ANORDNUNG MIT MOBILETELEFON**
ASSEMBLY COMPRISING A MOBILE TELEPHONE
SYSTEME COMPRENANT UN TELEPHONE MOBILE

(30) Priorität: 18.01.2001 DE 10102277; 20.04.2001 DE 10119655
(43) Veröffentlichungstag der Anmeldung: 15.10.2003
(73) Patentinhaber: Peiker, Andreas, 61381 Friedrichsdorf/Ts (DE)
(72) Erfinder: Peiker, Andreas, 61381 Friedrichsdorf/Ts (DE)
(74) Vertreter: Otten, Herbert
(86) Internationale Anmeldenummer: PCT/DE2002/000146
(87) Internationale Veröffentlichungsnummer: WO 2002/058408

(56) Entgegenhaltungen:
- EP-A- 0 831 667
- WO-A-98/11747
- WO-A1-01/61875
- DE-U- 20 015 036

## Beschreibung

Die Erfindung betrifft eine Anordnung nach dem Oberbegriff des Anspruchs 1.

Eine Anordnung mit Mobiltelefon ist aus der WO 95/28789 bekannt. Diese Anordnung besteht aus einer Basisstation, einem Adapter und einem Mobiltelefon, wobei die Basisstation und der Adapter über ein Kabel verbunden sind und das Mobiltelefon in den Adapter eingesteckt ist. In Abhängigkeit vom Typ des angeschlossenen Mobiltelefons, das von der Basisstation beispielsweise mittels einer im Adapter angeordneten Einheit zur Identifizierung erkannt wird, stellt diese eine Vielzahl von Betriebsparametern für den Gebrauch des Mobiltelefons ein, das mit dem Adapter verbunden ist. Nachteilig an einer derartigen Anordnung ist, dass bei einer Identifizierung des Mobilteils über die Kontaktbelegung oder eine durch Kontaktverknüpfungen erzeugte Ordnungsnummer die Basisstation nur für Mobiltelefone geeignet ist, deren technische Daten zum Zeitpunkt der Herstellung der Basisstation bekannt sind. Das heißt, die Basisstation ist nicht für neu auf den Markt kommende Mobiltelefone geeignet. Auch der Einsatz eines Speicherelements in einer im Adapter angeordneten Einheit zur Identifizierung, der identifizierende Daten an die Basisstation überträgt, schafft bei dem Problem der sogenannten Aufwärtskompatibilität keine vollständige Abhilfe, da auch hierdurch die technischen Daten bzw. die technische Leistungsfähigkeit der Basisstation nicht veränderbar ist. Somit kann beispielsweise ein neuartiges Mobiltelefon, das eine Ladespannung erfordert, welche durch die Basisstation nicht zur Verfügung gestellt werden kann, nicht geladen werden.

Ein weiterer Nachteil der bekannten Anordnung, die insbesondere auch für sogenannte Flottenbetreiber interessant sein soll, ist der aufwendige und damit teure Aufbau der Basisstation, da gerade dieser Bestandteil in jedem Fahrzeug zur Verfügung gestellt werden müsste.

Aus der WO 98 11747 A ist eine Anordnung mit Mobiltelefon nach der Gattung des Anspruchs 1 bekannt geworden. Dabei können vorzugsweise in einem Großraumfahrzeug mehrere Teilnehmerstationen mit Handfunktelefon und Basisstationen untereinander oder mit einer zentralen Kommunikationseinrichtung kommunizieren, die ihrerseits die Verbindung zu einer Station außerhalb des Fahrzeugs übernimmt. Ein Zentralrechner übernimmt die Koordination der jeweiligen Telefoniereinrichtungen mit dem Funknetz einschließlich zusätzlicher Funktionen.

Der Gegenstand des Dokuments D1 sieht keine Anpassung von verschiedenen Mobiltelefonen an eine universelle Basisstation vor.

Aus der EP 0 831 667 A1 ist eine ähnliche Einrichtung bekannt geworden.

Schließlich zeigt die DE 200 15 036 U1 eine mobile Aufnahmeeinrichtung für den Einsatz in einen Getränkehalter im Fahrzeug, bei welcher die Freisprecheinrichtung komplett in die Aufnahmeeinrichtung integriert ist. Der mobilen Freisprecheinrichtung ist keine weitere Basisstation zugeordnet.

Der Erfindung liegt die Aufgabe zugrunde, eine Anordnung zu schaffen, die für jedes beliebige Mobiltelefon einsetzbar ist und über eine einfache, kostengünstige Basisstation verfügt.

Diese Aufgabe wird in Verbindung mit dem Oberbegriff des Anspruchs 1 gelöst. Durch die in den Unteransprüchen genannten Merkmale sind vorteilhafte Ausführungen und Weiterbildungen der Erfindung möglich.

Bei der erfindungsgemäßen Anordnung enthält der Adapter eine auf das Mobiltelefon und die Basisstation ausgerichtete Elektronik, die eine Anpassung der vom Mobiltelefon kommenden elektrischen Informationen auf die Basisstation und eine Anpassung der von der Basisstation kommenden elektrischen Informationen auf das Mobiltelefon aufnimmt. Unter elektrischen Informationen sind hier Informationen wie z.B. Ladespannung, Ladeimpulsdauer, Sprachsignale, Empfangssignale, Sendesignale und aus- bzw. eingehende Steuersignale zu verstehen. Grundgedanke dieser Anordnung ist, dass eine universelle Basisstation, die im Fahrzeug angeordnet ist, mit jedem auf dem Markt befindlichen Funktelefon und mit jedem zukünftig auf den Markt kommenden Funktelefon kombinierbar ist, ohne dass eine Veränderung an der Basisstation erforderlich ist. Dies wird durch einen Adapter erreicht, der über eine Anpassung an die Form des Funktelefons und eine Anpassung an die Anordnung der elektrischen Kontakte in der Schnittstelle des Funktelefons hinaus aktiv mittels einer Elektronik in den Dialog zwischen dem Mobiltelefon und der Basisstation bzw. weiterer im Fahrzeug angeordneter Baugruppen eingreift. Durch den als Halteschale bzw. Aufnahme für das Mobiltelefon ausgebildeten Adapter ist es möglich, jegliche Art von Intelligenz des Funktelefons an das Niveau der Basisstation anzupassen. Aufgrund der Tatsache dass die Basisstation bei einer derartigen Anordnung keine Anpassungsfähigkeit aufweisen muss, kann diese als einfaches, kostengünstiges Bauteil ausgebildet sein. Hierdurch wird ein starker Anreiz geschaffen, die Basisstation als Standardbauteil bzw. Serienbauteil in Fahrzeuge aufzunehmen und so dem Kunden absolut freie Hand bei der Wahl des Mobiltelefons zu lassen, da dieser lediglich eine passende Adapterschale benötigt und keine aufwändigen Ein- und Umbauten veranlassen oder selbst durchführen muss. Auch Kunden, die nach einiger Zeit auf neuere Mobiltelefone umsteigen, sind nicht gezwungen, die Basisstation zu ersetzen, da ein Adapter, der auf das neue Mobiltelefon angepasst ist, jegliche erforderliche Anpassung vornimmt. Hierdurch werden Ressourcen geschont und aufwändige und lästige Umbauarbeiten am Fahrzeug überflüssig.

Eine vorteilhafte Ausbildung des Erfindungsgegenstandes sieht vor, in die Basisstation eine Sprachsignalbearbeitung zu integrieren, die insbesondere in der Lage ist, auf elektronischem Weg eine Echoauslöschung und/oder Rauschunterdrückung und/oder Signalverstärkung durchzuführen. Hierdurch ist vor allem der komfortable Einsatz einer über die Basisstation geschalteten Freisprecheinrichtung möglich. Eine Sprachsignalbearbeitung, die auch eine Sprachsignalerkennung umfasst, erlaubt die Sprachsteuerung des Mobiltelefons über die Basisstation bzw. wenigstens ein im Fahrzeug angeordnetes Mikrofon.

Weiterhin ist es vorteilhaft, die Basisstation mit einer Schnittstelle zum Adapter auszustatten, die mit einem Steuergerät für das Netzwerk des Fahrzeugs und/oder einem Steuergerät für das Mobiltelefon ausgestattet ist. Hierdurch können die im Adapter angeordneten Protokollmodule über die Schnittstellenverbindung zwischen Adapter und Basisstation elektrische Informationen abgeben bzw. aufnehmen.

Erfindungsgemäß wird weiter vorgeschlagen, dass der Adapter ein Modul zur Anpassung der Pegel der Sprachsignale an die Basisstation aufweist. Hierdurch ist der Adapter in der Lage, den Pegel der von der Basisstation ausgehenden Sprachsignale, die beispielsweise vom Mikrofon der Freisprecheinrichtung erfasst werden, auf den für das Mobiltelefon erforderlichen Pegel anzupassen. Umgekehrt ist der Adapter auch in der Lage, den Pegel der vom Mobiltelefon ausgehenden Sprachsignale, beispielsweise eines an den Lautsprecher der Freisprecheinrichtung gerichteten Sprachsignals, auf die Erfordernisse der Basisstation anzupassen, so dass diese Signale vom jeweiligen Gerät optimal verarbeitet werden können.

Eine zweckmäßige Ausgestaltung des Erfindungsgegenstandes sieht im Adapter Protokollmodule für das Netzwerk des Fahrzeugs und das Mobiltelefon vor, neben denen auch eine Initialisierungsroutine für die Abstimmung auf den Datenbus des Mobiltelefons vorgesehen ist. Durch diese Module ist die Abstimmung von Basisstation und Mobiltelefon aufeinander gewährleistet.

Vorteilhafterweise ist im Adapter ein Ladegerät für die Batterie des Mobilfunktelefons vorgesehen, das von der Basisstation versorgt wird. Hierdurch ist es möglich, auch Mobilfunktelefone zu laden, die eine höhere Ladespannung als die von der Basisstation zur Verfügung gestellte Versorgungsspannung erfordern, da das im Adapter angeordnete Ladegerät gegebenenfalls ein Hochtransformieren der Spannung durchführt. Weiterhin können hierdurch auch neuartige Batterien bzw. Akkumulatoren geladen werden, die Ladeimpulse erfordern, die von der Basisstation nicht erzeugt werden können, aber durch das im Adapter angeordnete Ladegerät generierbar sind.

Schließlich sieht eine weitere Ausbildung des Erfindungsgegenstandes vor, die Schnittstellen zwischen den einzelnen Bauteilen der Anordnung mittels Kabel und Stecker und/oder direkter Kontaktierung und/oder Funkverbindungen herzustellen. Hier ist insbesondere auch daran gedacht, beispielsweise die Stromversorgung mittels Kabel und Stecker oder Kontakten durchzuführen und die Sprach- und Datenschnittstellen über eine Funkverbindung durch Infrarot oder elektromagnetische Wellen (Blue Tooth) zu realisieren.

Eine Modifikation des Erfindungsgedankens sieht vor, die Basisstation und/oder die Adaptereinheit mit einem austauschbaren Speichermedium auszustatten, das zur Speicherung anwenderspezifischer Funktionen wie z.B. Freisprechen und/oder Spracherkennung und/oder Standortbestimmung und/oder individuelle Verkehrsleitung ausgebildet ist. Hierdurch ist es möglich, in der Anordnung nachträglich gewünschte Funktionen verfügbar zu machen oder vorhandene Funktionen durch andere oder erweiterte oder verbesserte Funktionen zu ersetzen. Die Basisstation und die Adaptereinheit werden durch diese Möglichkeit update-fähig und modular erweiterbar. Weiterhin können einzelne Funktionen auch einfach zwischen verschiedenen Fahrzeugen mit gleichen Basisstationen bzw. Adaptereinheiten ausgetauscht werden.

Es ist auch vorgesehen, durch das Speichermedium eine Funktion zur Verfügung zu stellen, welche die Nutzung anwenderspezifischer Funktionen, die bereits im Mobiltelefon vorhanden sind, auch für den Betrieb des Mobiltelefons im Fahrzeug verfügbar macht. Hier ist beispielsweise daran gedacht, eine im Mobiltelefon bereitgestellte Spracherkennung oder Geräuschauslöschung für den Betrieb des Mobiltelefons im Fahrzeug zu nutzen, wobei das Speichermedium eine Funktion bereitstellt, welche die Kommunikation mit der und Anpassung auf die vorhandene Funktion vornimmt. Hierdurch wird der Aufwand vermieden, Funktionen doppelt zur Verfügung zu stellen, die im Fahrzeug und außerhalb des Fahrzeugs benötigt werden.

Erfindungsgemäß ist es weiter vorgesehen, das Speichermedium als entnehmbares und/oder wiederbeschreibbares Speichermedium auszubilden. Durch den Einsatz eines Speichermediums, das als Speicherkarte oder Steckmodul oder SIM-Karte ausgebildet ist, ist die Handhabung des Speichermediums für den Anwender besonders einfach.

Durch den Einsatz eines Speichermediums, das über eine Funkverbindung wiederbeschreibbar ist, kann die Aufnahme weiterer oder geänderter Funktionen auch im eingesteckten Zustand erfolgen.

Schließlich sieht die Erfindung vor, das Speichermedium als reinen Datenträger zu bereits in der Anordnung vorhandenen Funktionen einzusetzen. Hierbei ist beispielsweise ein Einsatz des Speichermediums als Datenträger für einen erweiterten Wortschatz für eine Text- bzw. Sprachumwandlung vorgesehen. Somit lässt sich der Funktionsumfang des Mobiltelefons für den speziellen Einsatz im Fahrzeug erweitern.

Weitere Einzelheiten der Erfindung werden in der Zeichnung anhand von schematisch dargestellten Ausführungsbeispielen beschrieben.

Hierbei zeigt
- Fig. 1: eine schematische Darstellung der erfindungsgemäßen Anordnung,
- Fig. 2: eine perspektivische Darstellung einer möglichen Ausführungsform der Anordnung,
- Fig. 3: eine perspektivische Darstellung einer weiteren möglichen Ausführungsform der Anordnung und
- Fig. 4: eine schematische Darstellung einer dritten möglichen Ausführungsform der Anordnung.

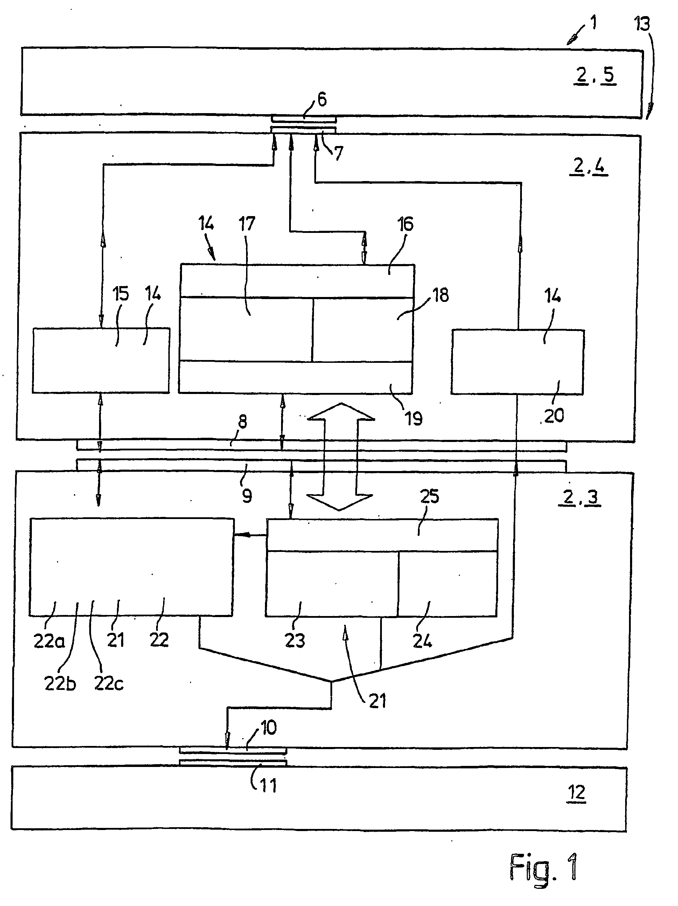

In Fig. 1 ist eine Anordnung 1 schematisch dargestellt. Die Anordnung 1 besteht aus drei Bauteilen 2, die als Basisstation 3, Adapter 4 und Mobiltelefon 5 ausgeführt sind. Das Mobiltelefon 5 weist eine Schnittstelle 6 auf, über die es mit einer ersten Schnittstelle 7 des Adapters 4 verbunden ist. Der Adapter 4 ist über eine zweite Schnittstelle 8 mit einer ersten Schnittstelle 9 der Basisstation 3 verbunden. Diese weist eine zweite Schnittstelle 10 auf, über die eine Verbindung zu einer Schnittstelle 11 eines Fahrzeugs 12 herstellbar ist, in dem die Anordnung 1 installiert ist. Die Verbindung zwischen den Schnittstellen 6 und 7 erfolgt über nicht dargestellte Steck- und/oder Federkontakte. Gemäß einer nicht dargestellten Ausführungsvariante ist auch eine Infrarot- oder eine sogenannte Blue Tooth-Verbindung vorgesehen. Im Adapter 4, der zusammen mit dem Mobiltelefon 5 eine adaptierte Telefoneinheit 13 bildet, sind Module 14 zur Adaption des Mobiltelefons 5 an die Basisstation 3 bzw. zur Adaption der Basisstation 3 an das Mobiltelefon 5 angeordnet. Bei diesen Modulen 14 handelt es sich um eine elektronische Einrichtung 15 (audio adaption) zur Anpassung der Pegel der Sprachsignale, die vom Mobiltelefon 5 über den Adapter 4 an die Basisstation 3 übermittelt werden bzw. die von der Basisstation 3 über den Adapter 4 an das Mobiltelefon 5 übermittelt werden. Ein weiteres Modul 14 umfasst ein Initialisierungsmodul 16 (initialisation routine), ein Protokollmodul 17 (vehicle network protocol module) für das Netzwerk des Fahrzeugs 12, ein Protokollmodul 18 (telephone protocol module), das die Übersetzung von elektronischen Informationen für das Mobiltelefon 5 übernimmt, und eine gemeinsame Schnittstelle 19 (application program interface), die mit der Schnittstelle 8 in Verbindung steht. Das Initialisierungsmodul übernimmt die Initialisierung des Datenbusses des Mobiltelefons auf den Adapter 4. Weiterhin verfügt der Adapter 4 über ein Modul 14, das als Ladegerät 20 (battery charger) ausgebildet ist. Alle Module 14 sind sowohl mit der Schnittstelle 7 als auch mit der Schnittstelle 8 des Adapters 4 verbunden. Insofern arbeitet der Adapter 4 als Vermittlungs-, Übersetzungs- bzw. Übertragungseinheit.

In der Basisstation 3 sind weitere Module 21 angeordnet. Bei diesen handelt es sich um eine Sprachsignalbearbeitung 22, die beispielsweise als Echoauslöschung 22a und/oder Rauschunterdrückung 22b und/oder Verstärker 22c agiert. Ein weiteres Modul 21 umfasst ein Steuergerät 23 (vehicle network controller) für das Netzwerk des Fahrzeugs 12, ein parallel dazu arbeitendes Steuergerät 24 (telephone controller) für das Mobiltelefon 2 und eine Schnittstelle 25 (application programm interface), über die beide Steuergeräte 23, 24 mit der Schnittstelle 9 verbunden. Über die Schnittstellen 8, 9, die in gleicher Weise wie die Schnittstellen 6, 7 verbunden sein können, erfolgt der Datenaustausch zwischen den Modulen 14, 21. Weiterhin ist eine Stromversorgung des Ladegeräts 20 über die Schnittstellen 8, 9 realisiert.

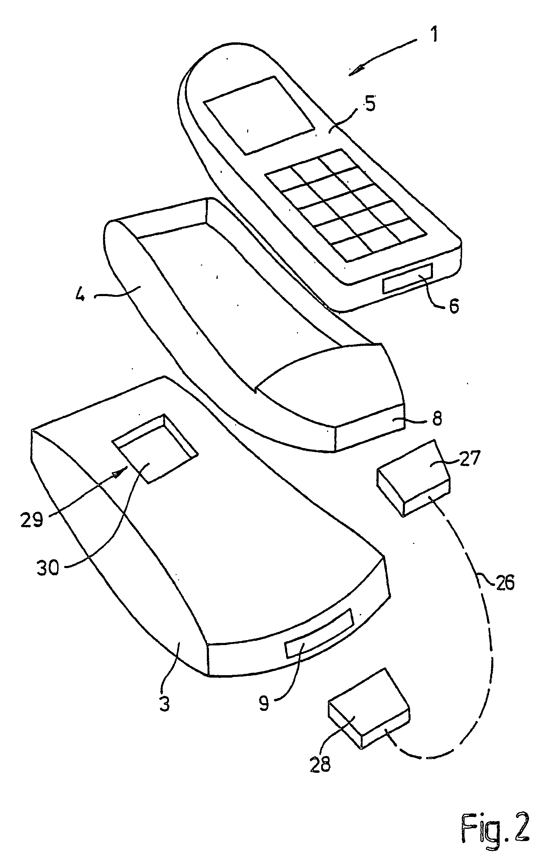

In Fig. 2 ist eine Ausführungsform der Anordnung 1 in perspektivischer Darstellung abgebildet. Die Basisstation 3 und der Adapter 4 sind an den Schnittstellen 8, 9 über ein Kabel 26 mit Steckern 27, 28 verbunden. Die Verbindung zwischen dem Adapter 4 und dem Mobiltelefon 5 erfolgt durch direkten Kontakt der Schnittstelle 6 des Mobiltelefons 5 mit der Schnittstelle 7 (siehe Figur 1) des Adapters 4. Der Adapter 4 ist an einer Ausnehmung 29 des Mobilteils 5, in der ein Magnet 30 angeordnet ist, festlegbar.

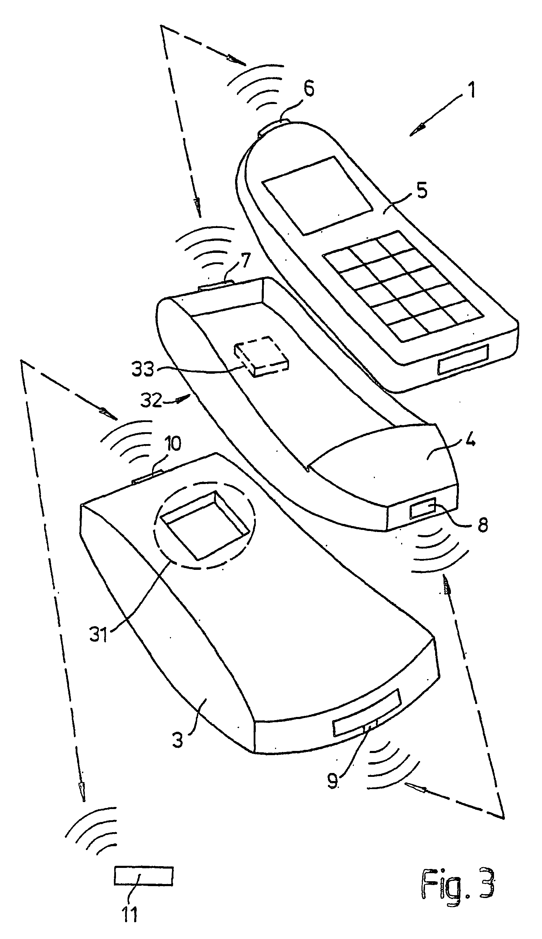

Figur 3 zeigt eine perspektivische Darstellung einer weiteren möglichen Ausführungsform der Anordnung 1. Das Mobiltelefon 5 ist über die Schnittstelle 6 drahtlos mit der Schnittstelle 7 des Adapters 4 verbunden, wobei die Schnittstellen 6, 7 als Sende- und/oder Empfangsschnittstellen für Infrarot- oder elektromagnetische Welle ausgebildet sind. Die drahtlose Verbindung des Adapters 4 mit dem Mobiltelefon 5 erlaubt, das Mobiltelefon 5 auch während des Betriebes aus dem Adapter zu entnehmen. Ebenso ist es möglich, das Mobiltelefon 5 gemeinsam mit dem Adapter 4 von der Basisstation 3 abzunehmen, wobei dann entweder das Laden einer im Mobiltelefon enthaltenen Energiequelle unterbrochen wird oder über eine im Adapter untergebrachte Energiequelle erfolgt. Die Kommunikation zwischen dem Adapter 4 und der Basisstation 3 über die Schnittstellen 8, 9 erfolgt ebenfalls schnurlos über Infrarot oder elektromagnetische Funkwellen. Zur Übertragung von Energie von der Basisstation 3 auf den Adapter 4 ist in der Basisstation eine Sendespule 31 vorgesehen, in die eine an einer Unterseite 32 des Adapters 4 vorgesehene Empfängerspule 33 im aufgelegten Zustand des Adapters 4 auf das Mobiltelefon 5 eintaucht. Um den Einbau der Anordnung 1 in das Fahrzeug möglichst einfach zu gestalten, ist die Basisstation 3 über die Schnittstelle 10 drahtlos mit der Schnittstelle 11 des Fahrzeugs verbunden. Die Energieversorgung der Anordnung 1 bzw. Basisstation 3 ist durch ein nicht dargestelltes Stromversorgungskabel oder mittels Induktion vorgesehen.

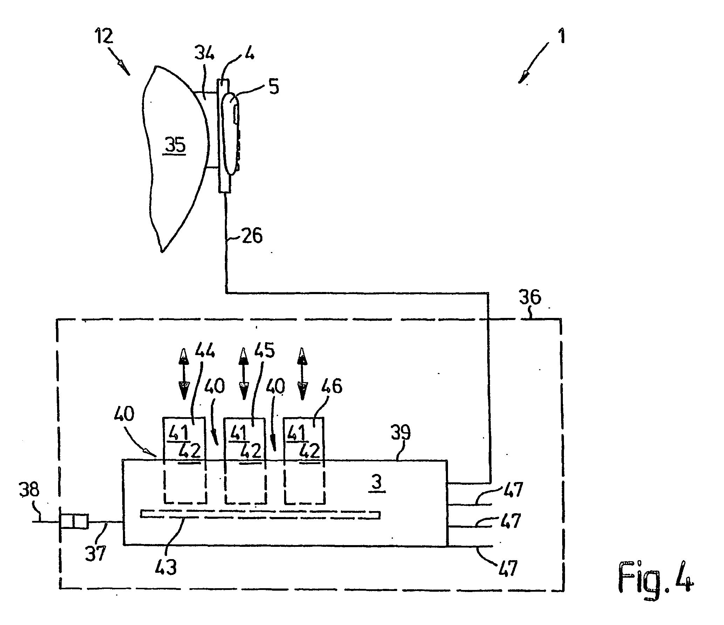

Figur 4 zeigt eine schematische, vereinfachte Darstellung einer dritten möglichen Ausführungsform der Anordnung 1. Das Mobiltelefon 5 ist in dem Adapter 4 aufgenommen. Dieser ist mittels eines Halters 34 an einem Armaturenbrett 35 des Fahrzeugs 12 befestigt. Der Adapter 4 ist über das Kabel 26 mit der Basisstation 3 verbunden. Die Basisstation 3 ist in einem Stauraum 36 des Fahrzeugs 12 angeordnet. In diesem Stauraum 36 sind weitere nicht dargestellte elektronische Komponenten wie z.B. ein CD-Laufwerk angeordnet. Über eine Verbindung 37 ist die Basisstation 3 an ein fahrzeugeigenes Bussystem 38 angeschlossen. Ein Gehäuse 39 der Basisstation 3 weist Ausnehmungen 40 auf, in welche Speichermedien 41 eingesteckt sind. Die Speichermedien 41 sind als Steckmodule 42 ausgebildet, die mit einer in der Basisstation 3 angeordneten Platine 43 in elektrischem Kontakt stehen. In die Basisstation 3 ist ein Spracherkennungsmodul 44, ein Echoauslöschungsmodul 45 und ein frei programmierbares Funktionsmodul 46 eingesteckt. Der Anschluss von Mikrofon und Lautsprecher erfolgt über Kontakte 47 oder über das fahrzeugeigene Bussystem 38. Gemäß einer nicht dargestellten Ausführungsvariante ist es vorgesehen, die Basisstation selbst als Steckmodul bzw. Steckkarte auszubilden, welche in einen mit dem fahrzeugeigenen Bussystem verbundenen Steckplatz einsteckbar ist. Weiterhin ist es vorgesehen, auch die Steckmodule zur Spracherkennung etc. auf Steckplätze zu setzen, die zum fahrzeugeigenen Bussystem gehören und die Verbindung zwischen diesen Steckmodulen und der Basisstation über das fahrzeugeigene Bussystem herzustellen.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche. Insbesondere sieht die Erfindung auch vor, im Adapter ein Spracherkennungsmodul aufzunehmen, so dass die Basisstation auf essentielle Bauteile bzw. Module beschränkt bleibt.

Gemäß einer weiteren Ausführungsvariante ist es vorgesehen, dass die Basisstation einen internen Lautsprecher und ein internes Mikrofon zur Verwirklichung einer Freisprechanlage enthält, damit der Installationsaufwand für die Basisstation im Fahrzeug so gering wie möglich gehalten wird.

### Bezugszeichenliste:

- 1: Anordnung
- 2: Bauteil
- 3: Basisstation
- 4: Adapter
- 5: Mobiltelefon
- 6: Schnittstelle (Mobiltelefon)
- 7: erste Schnittstelle (Adapter)
- 8: zweite Schnittstelle (Adapter)
- 9: erste Schnittstelle (Basisstation)
- 10: zweite Schnittstelle (Basisstation)
- 11: Schnittstelle (Fahrzeug)
- 12: Fahrzeug
- 13: adaptive Telefoneinheit
- 14: Modul (im Adapter)
- 15: elektronische Einrichtung
- 16: Initialisierungsmodul
- 17: Protokollmodul
- 18: Protokollmodul
- 19: Schnittstelle
- 20: Ladegerät
- 21: Modul (in Basisstation)
- 22: Sprachsignalbearbeitung
- 22a: Echoauslöschung
- 22b: Rauschunterdrückung
- 22c: Verstärker
- 23: Steuergerät für das Netzwerk des Fahrzeugs
- 24: Steuergerät für das Mobiltelefon
- 25: Schnittstelle
- 26: Kabel
- 27: Stecker
- 28: Stecker
- 29: Ausnehmung
- 30: Magnet
- 31: Sendespule
- 32: Unterseite
- 33: Empfängerspule
- 34: Halter
- 35: Armaturenbrett
- 36: Stauraum
- 37: Verbindung
- 38: fahrzeugeigenes Bussystem
- 39: Gehäuse (von 3)
- 40: Ausnehmung (in 3)
- 41: Speichermedium
- 42: Steckmodul
- 43: Platine
- 44: Spracherkennungsmodul
- 45: Echoauslöschungsmodul
- 46: Funktionsmodul
- 47: Kontakt

## Patentansprüche

1. Anordnung (1), bestehend aus einer Basisstation (3), einem Adapter (4) und einem Mobiltelefon (5), die miteinander in Verbindung stehen, wobei der Adapter (4) eine Informationsanpassung zwischen einer Universal-Basisstation (3) und einem austauschbaren Mobiltelefon (5) übernimmt, wobei für jedes Mobiltelefon (5) ein hieran angepasster Adapter (4) vorgesehen ist, der sowohl die elektrische als auch die protokollmäßige Anpassung zwischen Mobiltelefon und Basisstation und umgekehrt übernimmt, **dadurch gekennzeichnet, dass** die Basisstation (3) Module (21) umfasst und eine Schnittstelle (9) zu dem Adapter (4) aufweist, die mit den Modulen (21) in der Basisstation (3) verbunden ist, wobei eines der Module (21) ein Steuergerät (23) für das Netzwerk eines Fahrzeugs, ein parallel dazu arbeitendes Steuergerät (24) für das Mobiltelefon (5) und eine Schnittstelle (25) aufweist, über die die beiden Steuergeräte (23, 24) mit der Schnittstelle (9) zum Adapter (4) verbunden sind.

2. Anordnung nach Anspruch 1, **dadurch gekennzeichnet, dass** die Basisstation (3) eine Vorrichtung und/oder Software (22) zur Bearbeitung von Sprachsignalen umfasst, wie z.B. Echoauslöschung (22a) und/oder Rauschunterdrückung (22b) und/oder Signalverstärkung (22c).

3. Anordnung nach einem der vorhergehenden Ansprüche,
**dadurch gekennzeichnet, dass** der Adapter (4) eine Vorrichtung und/oder Software (15) zur Anpassung des Pegels der Sprachsignale an die Basisstation (3) aufweist.

4. Anordnung nach einem der vorhergehenden Ansprüche,
**dadurch gekennzeichnet, dass** der Adapter (4) eine Schnittstelle (8) zur Basisstation (3) aufweist, die eine Vorrichtung und/oder Software (14) umfasst, die als Protokollmodul (17) für das Netzwerk des Fahrzeugs und als Protokollmodul (18) für das Mobiltelefon (5) arbeitet und eine Initialisierungsroutine (16) für die Abstimmung auf den Datenbus des Mobiltelefons (5) umfasst.

5. Anordnung nach einem der vorhergehenden Ansprüche,
**dadurch gekennzeichnet, dass** der Adapter (4) ein Ladegerät (20) für eine Energiequelle des Mobilfunktelefons (5) umfasst.

6. Anordnung nach einem der vorhergehenden Ansprüche,
**dadurch gekennzeichnet, dass** die Verbindung zwischen vorzugsweise Teilen der Schnittstelle (9) der Basisstation (3) und vorzugsweise Teilen der Schnittstelle (8) des Adapters (4) durch ein Kabel und/oder eine Funkverbindung, wie z.B. Infrarot oder Blue Tooth, erfolgt.

7. Anordnung nach Anspruch 1, **dadurch gekennzeichnet, dass** die Basisstation (3) und/oder die zwischen die Basisstation (3) und das Mobiltelefon (5) geschaltete Adaptereinheit (4) ein austauschbares Speichermedium (41) umfasst, das zur Speicherung anwenderspezifischer Funktionen wie Freisprechen und/oder Verbindung zum Fahrzeugbus und/oder Geräuschauslöschung und/oder Echoauslöschung und/oder Spracherkennung und/oder Textumwandlung in Sprache und/oder Sprachumwandlung in Text einsetzbar ist.

8. Anordnung nach Anspruch 7, **dadurch gekennzeichnet, dass** das Speichermedium (41) anwenderspezifische Funktionen, die im Mobiltelefon (5) vorhanden sind, wie Spracherkennung und/oder Geräuschauslöschung und/oder Echoauslöschung für den Betrieb des Mobiltelefons im Fahrzeug verfügbar macht.

9. Anordnung nach einem der Ansprüche 7 oder 8, **dadurch gekennzeichnet, dass** das Speichermedium (41) als entnehmbares und/oder wiederbeschreibbares Speichermedium (41), wie Speicherkarte oder Steckmodul (42) ausgebildet ist.

10. Anordnung nach einem der Ansprüche 7, 8 oder 9, **dadurch gekennzeichnet, dass** das Speichermedium (41) über eine Funkverbindung wiederbeschreibbar ist.

11. Anordnung nach einem der Ansprüche 7, 8, 9 oder 10,
**dadurch gekennzeichnet, dass** das Speichermedium (41) ergänzende Daten zu anwenderspezifischen Funktionen des Mobiltelefons (5) und/oder der Basisstation (3) und/oder der Adaptereinheit (4) aufnimmt, insbesondere einen erweiterten Wortschatz für die Textumwandlung in Sprache und/oder die Sprachumwandlung in Text.

## Claims

1. Assembly (1), consisting of a base station (3), an adapter (4) and a mobile telephone (5), which are interconnected, wherein the adapter (4) is responsible for adapting information between a universal base station (3) and an exchangeable mobile telephone (5), for each mobile telephone (5) an adapter (4) adapted thereto being provided, which is responsible for the electrical and also the protocol-type adaptation between the mobile telephone and the base station and vice versa, **characterised in that** the base station (3) comprises modules (21) and has an interface (9) to the adapter (4), which is connected to the modules (21) in the base station (3), wherein one of the modules (21) has a control device (23) for the network of a vehicle, a control device (24) working parallel thereto for the mobile telephone (5) and an interface (25), by means of which the two control devices (23, 24) are connected to the interface (9) to the adapter (4).

2. Assembly according to claim 1, **characterised in that** the base station (3) comprises a device and/or software (22) for processing voice signals, such as e.g. echo obliteration (22a) and/or noise suppression (22b) and/or signal amplification (22c).

3. Assembly according to one of the preceding claims, **characterised in that** the adapter (4) comprises a device and/or software (15) for adapting the level of the voice signals to the base station (3).

4. Assembly according to one of the preceding claims, **characterised in that** the adapter (4) comprises an interface (8) to the base station (3), which comprises a device and/or software (14) which works as a protocol module (17) for the network of the vehicle and as a protocol module (18) for the mobile telephone (5) and comprises an initialising routine (16) for coordination to the data bus of the mobile telephone (5).

5. Assembly according to one of the preceding claims, **characterised in that** the adapter (4) comprises a charger (20) for an energy source of the mobile telephone (5).

6. Assembly according to one of the preceding claims, **characterised in that** the connection between preferably parts of the interface (9) of the base station (3) and preferably parts of the interface (8) of the adapter (4) takes place by a cable and/or a radio link, such as e.g. infrared or Blue Tooth.

7. Assembly according to claim 1, **characterised in that** the base station (3) and/or the adapter unit (4) switched between the base station (3) and the mobile telephone (5) comprises an exchangeable memory medium (41), which can be used to store user-specific functions such as handsfree talking and/or connection to the vehicle bus and/or noise obliteration and/or echo obliteration and/or voice recognition and/or text conversion into speech and/or voice conversion into text.

8. Assembly according to claim 7, **characterised in that** the memory medium (41) makes available user-specific functions which are provided in the mobile telephone (5), such as voice recognition and/or noise obliteration and/or echo obliteration for the operation of the mobile telephone in the vehicle.

9. Assembly according to one of claims 7 or 8, **characterised in that** the memory medium (41) is constructed as a removable and/or rewritable memory medium (41), such as a storage card or plug-in module (42).

10. Assembly according to one of claims 7, 8 or 9, **characterised in that** the memory medium (41) is rewritable via a radio link.

11. Assembly according to one of claims 7, 8, 9 or 10, **characterised in that** the memory medium (41) records supplementary data for user-specific functions of the mobile telephone and/or of the base station (3) and/or of the adapter unit (4), in particular an enlarged vocabulary for text conversion into speech and/or voice conversion into text.

## Revendications

1. Agencement (1) constitué d'une station de base (3) d'un adaptateur (4) et d'un téléphone mobile (5) qui sont reliés entre eux, l'adaptateur (4) assurant une adaptation d'informations entre une station de base universelle (3) et un téléphone mobile interchangeable (5), pour chaque téléphone mobile (5) étant prévu un adaptateur adapté (4) qui assure aussi bien l'adaptation électrique que l'adaptation de protocole entre le téléphone mobile et la station de base et inversement,
**caractérisé en ce que**
la station de base (3) renferme des modules (21) et comporte une interface (9) avec l'adaptateur (4) qui est relié aux modules (21) dans la station de base (3), l'un des modules (21) comportant un appareil de commande (23) pour le réseau d'un véhicule, un appareil de commande (24) pour le téléphone mobile (5) travaillant parallèlement à celui-ci, et une interface (25) par l'intermédiaire de laquelle les deux appareils de commande (23, 24) sont reliés par l'interface (9) avec l'adaptateur (4).

2. Agencement selon la revendication 1,
**caractérisé en ce que**
la station de base (3) comprend un dispositif et/ou un logiciel (22) pour traiter des signaux vocaux, comme par exemple la suppression d'écho (22a) et/ou l'élimination des bruits parasites (22b) et/ou l'amplification de signal (22c).

3. Agencement selon l'une des revendications précédentes,
**caractérisé en ce que**
l'adaptateur (4) comporte un dispositif et/ou logiciel (15) pour l'adaptation du niveau des signaux vocaux à la station de base (3).

4. Agencement selon l'une des revendications précédentes,
**caractérisé en ce que**
l'adaptateur (4) comporte une interface (8) avec la station de base (3), laquelle comprend un dispositif et/ou logiciel (14) qui fonctionne comme module de protocole (17) pour le réseau du véhicule et comme module de protocole (18) pour le téléphone mobile (5) et qui comprend un sous-programme d'initialisation (16) pour s'accorder au bus de données du téléphone mobile (5).

5. Agencement selon l'une des revendications précédentes,
**caractérisé en ce que**
l'adaptateur (4) comprend un chargeur (20) pour une source d'énergie du téléphone mobile (5).

6. Agencement selon l'une des revendications précédentes,
**caractérisé en ce que**
la liaison entre de préférence des parties de l'interface (9) de la station de base (3) et de préférence des parties de l'interface (8) de l'adaptateur (4) s'effectue par un câble et/ou une liaison radio, comme par exemple par infrarouges ou Blue Tooth.

7. Agencement selon la revendication 1,
**caractérisé en ce que**
la station de base (3) et/ou l'unité d'adaptateur (4) branchée entre la station de base (3) et le téléphone mobile (5) comprend un support de mémoire (41) interchangeable qui est utilisable pour l'enregistrement de fonctions propres à l'utilisateur comme le « mains libres » et/ou la liaison avec le bus de véhicule et/ou l'élimination de bruits et/ou l'élimination d'écho et/ou la reconnaissance vocale et/ou la conversation de texte en parole et/ou la conversation de parole en texte.

8. Agencement selon la revendication 7,
**caractérisé en ce que**
le support de mémoire (41) rend disponibles des fonctions propres à l'utilisateur qui existent dans le téléphone mobile (5), comme la reconnaissance vocale et/ou l'élimination de bruits et/ou l'élimination d'écho, pour le fonctionnement du téléphone mobile dans le véhicule.

9. Agencement selon l'une des revendications 7 ou 8,
**caractérisé en ce que**
le support de mémoire (41) est conçu comme un support de mémoire (41) amovible et/ou réinscriptible, tel qu'une carte mémoire ou un module enfichable (42).

10. Agencement selon l'une des revendications 7, 8 ou 9,
**caractérisé en ce que**
le support de mémoire (41) est réinscriptible par l'intermédiaire d'une liaison radio.

11. Agencement selon l'une des revendications 7, 8, 9 ou 10,
**caractérisé en ce que**
le support de mémoire (41) enregistre des données complémentaires sur les fonctions propres à l'utilisateur du téléphone mobile (5) et/ou la station de base (3) et/ou l'unité d'adaptateur (4), en particulier un vocabulaire étendu pour la conversation de texte en parole et/ou la conversation de parole en texte.
